# DEMANDE DE BREVET EUROPEEN

(11) **EP 1 455 537 A1**
(43) Date de publication de la demande: **08.09.2004**
(21) Numéro de dépôt: 04100848.3
(22) Date de dépôt: 03.03.2004
(51) Int. Cl.: H04N 7/66, H04L 1/00

(54) **Protection de données avec en-tête contre les erreurs dans un système de transmission**

(30) Priorité: 07.03.2003 FR 0302881
(71) Demandeur: Thales, 92200 Neuilly Sur Seine (FR)
(72) Inventeur: Lamy, Catherine, 94117 Arcueil Cedey (FR); Nicholson, Didier, 94117 Arcueil Cedex (FR)
(74) Mandataire: Dudouit, Isabelle

(57) **Abrégé**

Procédé et système pour protéger et/ou détecter des informations dans un système de transmission de données, les données échangées ont un format comprenant un ou plusieurs en-têtes et une zone de données. II comporte une étape d'insertion au niveau d'au moins un en-tête d'un segment indicateur EPB (Error Protection Block), compatible avec le format des données échangées et comprenant des données de redondance pour détecter et/ou corriger des erreurs.

## Description

La présente invention concerne notamment un procédé et un système pour la protection des données compressées contre les erreurs.

Elle s'applique dans le domaine des transmissions avec pertes dues au medium de transmission (par exemple les transmissions sans fil).

Elle s'applique, par exemple, dans des systèmes de transmission d'images sans pertes ou avec pertes utilisant la norme JPEG2000.

L'invention est aussi utilisée dans tout système de transmissions de données dont le format comporte un en-tête comprenant des indicateurs en relation avec les données qui suivent l'en-tête.

Dans le standard JPEG2000 (ISO/IEC 1544) il existe des outils de prise en compte des erreurs qui peuvent résulter de la transmission des flux binaires (bitstream) ou des flux compressés (codestream) ou des fichiers dans un environnement propice aux erreurs. Ces outils décrits dans la recommandation T.800|ISO/IEC 154444-1 permettent de détecter la présence d'erreurs durant le décodage entropique d'un décodeur JPEG 2000 et/ou de resynchroniser le procédé de décodage dans le cas de pertes de paquets de données. Ces outils ne permettent toutefois pas de prévenir la présence d'erreurs dans les en-têtes (En-tête principal ou en-tête tuile) ni de corriger les erreurs éventuellement présentes dans le flux compressé.

Des modifications dans le procédé de codage/décodage entropique permettent soit d'augmenter le mécanisme de prise en compte des erreurs proposé dans le standard JPEG2000 et/ou de réaliser un mécanisme de protection d'erreurs. L'avantage de ces techniques est d'offrir un très bon compromis entre la redondance ajoutée et la capacité de protection et de décodage d'erreurs. Le flux compressé résultant n'est hélas alors pas conforme à la définition de mécanisme de prise en compte des erreurs pour JPEG 2000 (Recommandation T.803| ISO/IEC 154444-4).

JPEG 2000 inclut également de nombreuses options qui permettent de construire et d'ordonner des données compressées de différentes façons. Il permet en particulier de grouper l'information.

Après un ordonnancement particulier et un formattage de la structure des données, il est possible de séparer le flux compressé JPEG 2000 en plusieurs parties. Chacune de ces parties présente un degré de sensibilité différent par rapport aux erreurs. Ainsi identifiée, chaque partie peut alors être protégée selon son niveau de sensibilité et son importance dans le flux en utilisant des niveaux de redondance différents. Ceci permet de mettre en place un mécanisme de protection inégale des données pour les différentes parties du flux, qui permettra d'améliorer grandement les performances en terme largeur de bande ou puissance consommée par rapport à l'information utile transmise. L'inconvénient de l'emploi d'une telle méthode est qu'elle repose généralement sur la séparation des flux de sensibilité différentes, qui sont codés et transmis séparément. Comme il n'est pas possible de décoder séparément les différentes parties du flux de données, il s'avère alors nécessaire après la correction d'erreur (décodage correcteur d'erreur) de combiner à nouveau les données pour regénérer un flux JPEG 2000 conforme (selon la recommandation T.803| ISO/IEC 154444-4).

La référence de Poulliat.C, Vila P., Pirez D., Fijalkow I., intitulée « Progressive JPEG 2000 Image Transmission over noisy channel », Eusipco 2000, Toulouse, France, 3rd-6th September 2000, décrit une telle solution réalisant la protection inégale des données au moyen de codes RCPC (abrégé anglo-saxon de Rate Compatible Punctured Convolutional).

Le document de Ambarish Natu, David Taubma ayant pour titre « Unequal Protection of JPEG 2000 Code-Streams in Wireless Channels », IEEE GLOBECOM'2, divulgue une autre solution de protection inégale contre les erreurs. La méthode utilise des codes de Reed Solomon pour protéger un flux compressé (en terme anglo-saxon codestream) JPEG 2000 contre les erreurs. Dans ce document, la protection des en-têtes contre d'éventuelles erreurs n'est pas évoquée et l'information redondante est utilisée uniquement par les paquets de données du codestream. Les paquets sont modifiés pour inclure l'information redondante. Le flux codestream résultant n'est pas conforme au mécanisme de prise en compte des erreurs défini dans la recommandation T.803 | ISO/IEC 15444-4.

L'objet de la présente invention repose notamment sur une nouvelle approche pour laquelle l'information redondante utilisée pour la correction d'erreurs et/ou le décodage est insérée au niveau d'un en-tête.

L'objet de la présente invention concerne un procédé pour protéger des informations transmises dans un système de transmission de données, les données échangées ont un format comprenant un ou plusieurs en-têtes et une zone de données. Il est caractérisé en ce qu'il comporte au moins une étape d'insertion, au niveau d'au moins un en-tête, d'au moins un segment indicateur EPB compatible avec le format des données échangées comprenant des données de redondance pour détecter et/ou corriger des erreurs.

Un segment indicateur EPB est disposé par exemple dans un en-tête principal ou bien après un en-tête situé au début d'une zone de données.

Un segment EPB peut comporter une partie destinée à protéger l'en-tête en utilisant un code par défaut et une autre partie correspondant au code correcteur d'erreur spécifié dans le paramètre de l'EPB.

Le procédé est utilisé par exemple dans le cas de transmission d'images JPEG2000.

L'invention concerne aussi un système de transmission de données, le format de transmission de données comprenant au moins un en-tête et des données utiles. Il est caractérisé en ce qu'il comporte au moins un émetteur adapté à insérer au niveau d'au moins un en-tête au moins segment indicateur EPB compatible avec le format des données transmises comprenant des données de redondance pour détecter et/ou corriger des erreurs.

L'objet de l'invention présente notamment les avantages suivants :
- Etre compatible avec le standard existant JPEG 2000 puisque le flux résultant est conforme à la recommandation JPEG2000. Les décodeurs existants, y compris ceux ne reprenant pas les recommandations de JPEG partie 11 ne doivent pas être modifiés.
- Les outils de détection d'erreur et de lutte contre leurs effets (resilience) proposés par le standard JPEG 2000 peuvent toujours être utilisés tout en offrant la protection d'erreurs de l'en-tête, la protection inégale contre les erreurs, et en étant conforme à la définition de JPEG 2000 (recommandation T.803 | ISO/IEC 154444-4).
- Les données redondantes nécessaires pour la détection et la correction des erreurs sont mémorisées dans des zones dédiées dans le flux compressé JPEG 2000.
- Les données redondantes (information redondante) permettent avec un code correcteur d'erreurs approprié, de détecter et de corriger des données erronées. Le type de code correcteur d'erreur peut être spécifié aussi bien que la gamme de données du *codestream* à protéger par chaque code.

D'autres caractéristiques et avantages de l'invention apparaîtront mieux à la lecture de la description d'exemples de réalisation donnés à titre illustratif et nullement limitatif en relation avec les figures qui représentent :
- La figure 1 un exemple de disposition d'un segment indicateur dédié EPB dans l'en-tête principale d'un flux de données,
- La figure 2 un exemple de syntaxe pour un segment indicateur EPB (ou segment indicateur dédié) selon l'invention,
- La figure 3 l'insertion des données redondantes pour la protection de l'en-tête principale dans le cadre d'un flux JPEG2000,
- La figure 4 l'insertion des données redondantes pour la protection d'une en-tête tuile dans le cadre d'un flux JPEG2000,
- Les figures 5 et 6 deux variantes de la figure 4,
- La figure 7 un modèle de protection des données de la partie tuile,
- La figure 8 un exemple d'insertion des données dans le cas d'une protection inégale des données.

Afin de mieux faire comprendre le principe mis en oeuvre par l'invention, l'exemple qui suit est donné à titre illustratif et nullement limitatif pour des systèmes de transmission d'images JPEG 2000 avec pertes ou sans pertes (standard ISO/IEC 15444). L'idée selon l'invention consiste notamment à insérer un ou plusieurs segments indicateurs appelés par la suite EPB (Error Protection Block) compatible avec le format des données transmises. Respectant la syntaxe des segments indicateurs du standard concerné, ces EPB contiennent l'information redondante qui va permettre la correction et/ou la détection des erreurs.

L'information redondante utilisée pour la correction et/ou la détection des erreurs est insérée par exemple dans l'en-tête principal et/ou dans un en-tête tuile. Cette information redondante est générée par exemple au moyen des outils de la liste suivante :
- Data check code (CRC),
- Répétition de données,
- Codage correcteur d'erreur systématique.

Les données redondantes permettent notamment, avec le code correcteur d'erreurs approprié de détecter et/ou de corriger les données erronées.

L'exemple est donné pour un système de transmission de données conforme au standard JPEG2000 comportant un émetteur comprenant par exemple un codeur adapté à insérer l'information redondante et un récepteur comprenant par exemple un décodeur adapté à décoder et/ou à corriger les erreurs.

Pour rappel, dans le format JPEG 2000, le format des données transmises comporte un en-tête principal référencé I sur la figure, une ou plusieurs en-têtes tuile II et des données dites utiles (contenant les informations). L'en-tête principal est situé au début du flux compressé. Les en-tête tuile sont généralement placés au début de chaque partie tuile. Comme pour les autres indicateurs (définis dans la partie I de JPEG 2000 (ITU-T Rec. T.800 | ISO/IEC 15444-1), les indicateurs EPB définis dans la présente invention ont une longueur de 2 octets. La valeur du premier octet est 0×FF. Le second octet spécifie l'utilisation de l'indicateur et peut prendre une valeur comprise entre 0×01 et 0×FE à l'exception de ceux déjà définis par la recommandation ITU-T Rec. T.81 | ISO/IEC 10918-1 et ITU-T Rec. T.84 | ISO/IEC 10918-3.

Un segment indicateur de type EPB comprend un indicateur et les paramètres associés à l'indicateur. Par définition, les deux premiers octets de tout EPB disposés immédiatement après l'indicateur correspondent à un entier connu sous l'expression anglo-saxone « an unsigned big endian integer value » qui indique la longueur en octets des paramètres de l'indicateur (inclut les deux octets de cette longueur du paramètre mais qui n'inclut pas les deux octets de l'indicateur lui-même). Pour un segment indicateur EPB qui n'est pas spécifié dans la recommandation ITU-T T.800 | ISO/IEC 15444-1, le décodeur du système utilisera la longueur du paramètre pour éliminer les segments indicateurs. Un décodeur conforme à la partie 1 JPEG2000 omettra le segment indicateur EPB non reconnu et ne prendra pas en compte les données contenant l'information redondante. Un décodeur selon l'invention sera capable d'interpréter et d'utiliser la redondance.

En résumé l'invention permet :
- De localiser le bloc de données contenant l'information redondante dans le codestream,
- De protéger l'indicateur lui-même, sa longueur et ses paramètres en utilisant un code par défaut,
- De spécifier un code correcteur d'erreurs à utiliser pour la partie restante des données redondantes incluses dans le segment indicateur EPB, suivant la partie qui utilise le code par défaut. Cette fonctionnalité permet de spécifier tout code correcteur d'erreur et d'utiliser des codes pour seulement une partie du codestream JPEG2000. Elle permet aussi la protection inégale d'erreur.

Les figures dont la description est donnée ci-après décrivent plusieurs exemples de positionnement d'un ou de plusieurs EPB dans un flux compressé JPEG2000.

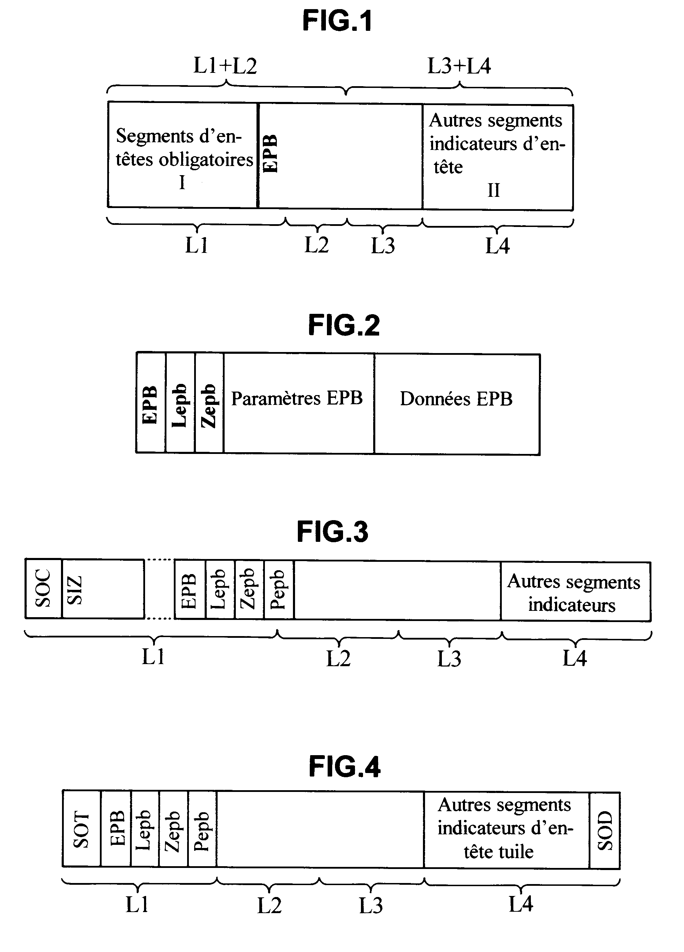

La figure 1 représente un exemple de positionnement de l'indicateur EPB dans un en-tête de flux compressé quelconque. Par respect au format du flux considéré, le segment indicateur EPB est inclus immédiatement après les différents en-tête obligatoires (e.g. indicateur de début de flux, ...). Le début de la trame, y compris le début du segment indicateur EPB étant protégé par un code par défaut défini au préalable. Il est en effet important, en pratique, de savoir retrouver facilement la taille des données protégées afin de pouvoir appliquer efficacement le décodage correcteur d'erreurs. A titre d'exemple, la protection de ces données est réalisée au moyen d'un code de Reed-Solomon RS(L1+L2, L2) où les L1 données utiles sont protégées par une redondance de longueur L2 contenue dans le segment indicateur EPB. Ayant ainsi protégé le début du flux compressé, on est alors également à même de récupérer les données contenues dans le début du segment indicateur EPB, et donc en particulier la définition du code correcteur utilisé pour protéger les données suivant ledit marqueur. La connaissance de ce code, par exemple un Reed-Solomon RS(L3+L4, L4) permet alors de décoder la suite du flux, en utilisant les données redondantes de longueur L3 pour corriger d'éventuelles erreurs sur la suite des en-têtes de longueur L4. Ceci est illustré dans le cas de la protection de l'en-tête principal d'un flux compressé JPEG 2000 dans la Figure 3, où pour rester en conformité avec le standard on conserve en tête de trame l'indicateur SOC (Start of Codestream pour Début de Flux Compressé) suivi de l'indicateur SIZ. Le segment indicateur EPB décrit en Figure 1 portant l'information redondante ayant notamment pour fonction de décoder et de corriger des erreurs éventuelles est donc inséré immédiatement après l'indicateur SIZ (Taille de l'image et des tuiles, Image and Tile Size) dans le cas de l'en-tête principal.

Dans cet exemple, les indicateurs SIZ et EPB constituent un premier jeu de données dont la longueur est de L1 octets. Cette longueur L1 est protégée par L2 octets de données redondances disposés à la suite. De cette façon, le flux bitstream reste en conformité avec la partie I de JPEG 2000 et lorsque le code pour la protection est fixé, le décodage est par exemple réalisé sans requérir le transfert d'une information supplémentaire (et non protégée). Cette partie L1+L2 est par exemple générée au moyen d'un code Reed-Solomon RS(L1+L2, L1).

Le reste des segments indicateurs (L4 octets) ou les paquets de données suivants peuvent ainsi être protégés par les L3 octets restants de l'EPB, par exemple au moyen d'un code RS(L3+L4, L4).

Pour des raisons d'efficacité, le procédé code un ou plusieurs EPB dans un en-tête. En fait, la taille de l'en-tête principal peut se révéler assez grande lorsqu'elle inclut des indicateurs optionnels comme PPM (En-têtes des packets placés dans l'en-tête principal, en anglo-saxon Packed Packet headers Main Header). La syntaxe EPB comporte alors un index EPB qui permet la présence de plusieurs EPB dans l'en-tête. Si l'index est positionné à 0, le bloc EPB est seul présent, autrement les différents EPB sont groupés ensemble.

La figure 2 schématise un exemple de syntaxe utilisée pour un EPB. Les différents champs le constituant sont :
- EPB : code indiquant la nature du segment indicateur,
- Lepb : longueur du segment indicateur en octets. Par définition, il n'inclut pas celle du code de l'indicateur,
- Zepb : index du segment indicateur relatif à tous les autres EPB présents dans l'en-tête courant,
- Pepb : paramètres de l'EPB. Ces paramètres définissent le code utilisé pour générer les informations de redondance protégeant les informations suivant le segment indicateur,
- EPB data : contient les données permettant la protection permettant la correction (en général des bits de redondance).

### Code correcteur d'erreurs

Deux codes correcteurs d'erreur par défaut sont par exemple définis pour protéger respectivement le début de l'en-tête principal et le début des en-têtes de tuile. Dans le cas de conditions de transmission difficiles, ces codes par défaut possèdent une capacité importante de correction. Leur choix est par exemple effectué par exemple en prenant en compte la taille des paquets d'erreurs (error bursts en termes anglo-saxon) les plus fréquents dans les modes de fonctionnement les plus classiques, afin de dimensionner au mieux la capacité de correction. A titre d'exemple, on peut citer le code RS (128,64) pour la protection de l'en-tête principal et le code RS(44,22) pour les en-têtes des tuiles.

### Spécification d'un code correcteur d'erreurs

Les paramètres inclus dans le segment indicateur EPB permettent de spécifier le code correcteur d'erreurs à utiliser dans le reste des parties du flux codé. Ces paramètres sont eux-mêmes protégés par le code correcteur d'erreurs précédent qui protège le début du segment indicateur : le code EPB, la longueur Lepb et l'index Zepb.

Il est possible de spécifier, par exemple, un code correcteur d'erreurs pour chaque segment indicateur EPB. En utilisant la fonctionnalité d'index qui permet de générer plusieurs segments indicateurs EPBi, il est alors possible de spécifier différents codes correcteurs d'erreurs pour une zone de la partie tuile. Le choix du code est fait par exemple en tenant compte de la capacité du code correcteur d'erreurs et de la sensibilité relative aux erreurs des paquets de données inclus dans la partie tuile. Il est ainsi possible grâce à ce mécanisme de réaliser une protection inégale d'erreur.

Les figures 3 à 8 schématisent différents exemples de mise en oeuvre du principe selon l'invention explicité ci-dessus.

Le figure 3 schématise un exemple de protection de l'en-tête principal.

Le premier segment indicateur EPB inclus dans l'en-tête principal est situé par exemple immédiatement après les SIZ marker segment. Sa taille dépend du nombre des composantes de l'image. La localisation du premier EPB marker segment est effectuée au cours d'une étape de synchronisation en utilisant la détection d'erreur. Cette étape de synchronisation est simplifiée par le fait que la place du segment indicateur EPB est fortement contrainte. Ainsi, dans le cadre de JPEG 2000, le champ SOC étant de taille fixe, seule la taille variable du champ SIZ est susceptible de modifier la place du segment indicateur EPB. Les différentes tailles possibles du champ SIZ, à compter par les plus fréquentes (1, 3, 4 composantes) seront testées, et il sera fait appel aux capacités de détection d'erreur du code correcteur choisi pour déterminer la taille la plus probable, par exemple en retenant la solution correspondant au plus faible nombre d'erreurs détectées. Il sera également judicieux de profiter de la connaissance apportée par la structure du flux JPEG 2000 (nombre de composantes contenu dans le champ SIZ, valeur du code indicateur EPB fixée) soit pour procéder à une vérification a posteriori de la solution trouvée la plus fiable, soit comme valeurs a priori dans un processus de décodage détecteur d'erreur plus élaboré.

L'en-tête principal peut contenir plusieurs EPBi marker segments, non groupés ou groupés. Dans le cas d'EPBi groupés, les différents segments indicateurs EPB sont disposés les uns après les autres, avant le reste de l'information contenue dans l'en-tête principal . Dans le cas de segments indicateurs les EPB apparaissent chacun immédiatement après la partie des données auxquelles ils se réfèrent. Ces deux modes de répartition, valables tant pour l'en-tête principal que pour les en-têtes de tuiles, sont présentés par des exemples dans le cas d'en-tête de tuile dans la suite de la description.

### Protection d'erreur de l'en-tête tuile

La figure 4 schématise le cas où un segment indicateur EPB est utilisé pour protéger l'en-tête de la partie tuile. Dans ce cas, les données de début de tuile, de longueur L1, sont protégées en utilisant la redondance placée dans la partie de longueur L2 de la donnée EPB, utilisant le code correcteur d'erreurs par défaut pour la partie en-tête de tuile. Les données suivantes de l'en-tête tuile de longueur L4 sont alors protégées par les données de redondance placées dans la partie L3 de la donnée EPB, au moyen du code correcteur d'erreurs spécifié dans le paramètre Pepb.

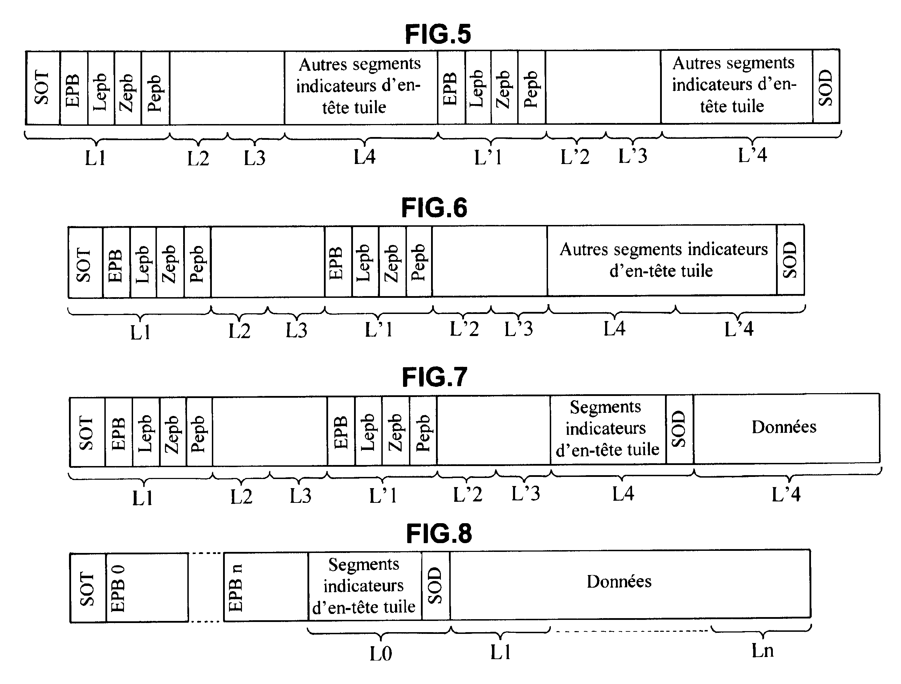

La figure 5 représente le cas où deux segments indicateurs EPB sont utilisés pour protéger l'en-tête de la partie tuile. Dans cet exemple, les données de début de tuile, de longueur L1, sont protégées par la redondance placée dans la partie de longueur L2 de la première donnée EPB. Les données suivantes de longueur L4, correspondant à différents segments de l'en-tête de tuile, sont alors protégées par les données de redondance placées dans la partie L3 de la donnée EPB, au moyen du code défini dans le paramètre Pepb. Suit alors un nouveau segment indicateur EPB, dont les données de longueur L'1 sont protégées par la partie L'2 des données EPB de ce second segment indicateur au moyen du code correcteur d'erreurs par défaut de tuile. Les données suivantes de longueur L'4, correspondant à différents segments de l'en-tête de tuile, sont alors protégées par les données de redondance placées dans la partie L'3 de la donnée EPB de ce second segment indicateur au moyen du code correcteur d'erreurs spécifié dans le paramètre du second segment indicateur EPB. Cette structure permet de protéger différemment des différents segments indicateurs fondamentaux, tels que QCD (Valeurs de quantification par defaut, Quantization Default), alors que les segments indicateurs optionnels comme PLT (Longueur des packets indiquée dans l'en-tête de tuile, Packet length Tile Part header) peuvent être protégés avec moins de redondance ou même pas protégés du tout.

La figure 6 schématise un exemple d'application où deux segments indicateurs groupés sont utilisés pour protéger l'en-tête de tuile. Dans cet exemple, les données de début d'en-tête de longueur L1 sont protégées par la partie de longueur L2 de la donnée EPB du premier segment indicateur EPB au moyen du code correcteur d'erreurs de tuile par défaut. Les données d'en-tête de longueur L'1 du second EPB sont protégées par la partie de longueur L'2 de la donnée EPB du second segment indicateur en utilisant ce même code correcteur d'erreurs de tuile par défaut. Suivent alors les données de segments indicateurs d'en-tête de longueur L4, protégées en utilisant la partie de longueur L3 de donnée EPB du premier segment indicateur, au moyen du code correcteur d'erreurs spécifié dans le paramètre Pepb du premier segment indicateur EPB. Suivent ensuite les données d'en-tête de longueur L'4, qui sont protégées par la redondance de longueur L'3 au moyen du code correcteur d'erreurs spécifié par le paramètre Pepb du second segment indicateur EPB . Cette structure permet donc de protéger différemment des segments indicateurs fondamentaux tels que QCD (Valeurs de quantification par defaut, Quantization Default), alors que les segments optionnels comme le PLT peuvent être protégés avec moins de redondance. Bien entendu, on peut certains segments indicateurs peuvent ne pas être protégés du tout, par exemple en étant traités par un segment indicateur EPB avec une redondance de type L'3=0, ou en étant placés dans l'en-tête sans protection d'un segment indicateur EPB.

### Protection des données de la partie tuile

Les figures 7 et 8 montrent comment il est possible d'étendre la capacité de protection aux données de la tuile, c'est-à-dire aux bits situés après le segment indicateur SOD. Dans le premier cas, décrit par la figure 7, on voit comment les données de redondance disposées dans les différents segments indicateurs EPB peuvent protéger les données des paquets. Dans l'exemple décrit à la figure 7, le premier segment indicateur EPB protège les données de longueur L4 de l'en-tête de la tuile au moyen de la redondance de longueur L3 placée dans son champ de données EPB et du code correcteur d'erreurs décrit dans son champ Pepb, alors que le second segment indicateur EPB protège les données de longueur L'4 des paquets qui suivent immédiatement l'en-tête tuile au moyen de la redondance de longueur L'3 placée dans son champ données EPB et du code correcteur d'erreurs décrit dans son champ Pepb. Ce découpage peut bien entendu être généralisé à un nombre de segments indicateurs EPB supérieur à deux. De même, il est possible de protéger des données d'en-tête et des data dans le même segment indicateur EPB.

### Protection des données utilisant la protection inégale contre les erreurs

La figure 8 présente l'extension du concept précédent au cas d'une protection inégale des données. Ainsi, dans le cas où le paquet de données présente différents niveaux de sensibilité aux erreurs, il est possible de définir plusieurs segments indicateurs qui définiront des codes correcteurs d'erreur adaptés à ces différents niveaux de sensibilité. Le procédé insère alors au niveau de l'en-tête tuile par exemple plusieurs segments indicateurs EPB0, EPB1, ..., EPBn. Chaque segment EPBi protège un sous ensemble du paquet de données. Bien entendu, l'utilisation de différents segments indicateurs ne présage en rien de l'utilisation de différents codes correcteurs d'erreurs, non plus que de leurs capacités respectives de correction. L'invention permet ainsi d'effectuer une protection inégale des données pour des flux JPEG2000.

## Revendications

1. Procédé pour protéger des informations transmises dans un système de transmission de données, les données échangées ont un format comprenant un ou plusieurs en-têtes et une zone de données **caractérisé en ce qu'**il comporte au moins une étape d'insertion, au niveau d'au moins un en-tête, d'au moins un segment indicateur EPB, compatible avec le format des données échangées et comprenant des données de redondance pour détecter et/ou corriger des erreurs.

2. Procédé selon la revendication 1 **caractérisé en ce qu'**un segment indicateur EPB est disposé dans un en-tête principal.

3. Procédé selon la revendication 1 **caractérisé en ce qu'**un segment indicateur EPB est disposé après un en-tête situé au début d'une zone de données.

4. Procédé selon l'une des revendications 1 et 3 **caractérisé en ce que** le segment EPB comporte une partie destinée à protéger l'en-tête en utilisant un code par défaut et une autre partie correspondant au code correcteur d'erreur spécifié dans le paramètre de l'EPB.

5. Procédé selon l'une des revendications 1 à 4 **caractérisé en ce qu'**il comporte plusieurs segments EPBi disposés ou non les uns à la suite des autres et protégeant les données disposées après le ou les en-têtes.

6. Procédé selon l'une des revendications 1 à 5 **caractérisé en ce que** les données transmises présentent des sensibilités différentes aux erreurs, l'en-tête comporte plusieurs segments EPBi, un segment EPBi comprenant un code correcteur d'erreur qui est choisi sensiblement en fonction de ces sensibilités.

7. Procédé selon l'une des revendications 1 à 4 **caractérisé en ce que** les données transmises présentent des niveaux de sensibilité différents aux erreurs, l'en-tête comporte plusieurs segments EPBi, le code correcteur d'erreur est le même pour les données transmises.

8. Procédé selon l'une des revendications 1 à 7 **caractérisé en ce que** les données sont des images JPEG2000.

9. Dispositif de transmission de données, le format de transmission de données comprenant au moins un en-tête et des données utiles, **caractérisé en ce qu'**il comporte au moins un émetteur adapté à insérer au niveau d'au moins un en-tête au moins un segment indicateur EPB, compatible avec le format des données échangées et comprenant des données de redondance pour détecter et/ou corriger des erreurs.
